# NEUE EUROPÄISCHE PATENTSCHRIFT

(11) **EP 1 977 640 B2**
(45) Veröffentlichungstag und Bekanntmachung des Hinweises auf die Entscheidung über den Einspruch: **26.02.2014**
(45) Hinweis auf die Patenterteilung: 09.02.2011
(21) Anmeldenummer: 07123613.7
(22) Anmeldetag: 19.12.2007
(51) Int. Cl.: A01D 43/08, A01D 43/073

(54) **Selbstfahrende landwirtschaftliche Erntemaschine mit steuerbarer Überladeeinrichtung**
Self-driving agricultural harvester with controllable transfer device
Moissonneuse agricole automobile dotée d'un dispositif de transbordement réglable

(30) Priorität: 04.04.2007 DE 102007016670
(43) Veröffentlichungstag der Anmeldung: 08.10.2008
(73) Patentinhaber: CLAAS Selbstfahrende Erntemaschinen GmbH, 33428 Harsewinkel (DE)
(72) Erfinder: Brunnert, Andreas, 33397, Rietberg (DE); Meyer zu Helligen, Lars Peter, 32139, Spenge (DE); Nienaber, Gerhard, 59320, Ennigerloh (DE); Diekhans, Dr. Norbert, 33335, Gütersloh (DE)

(56) Entgegenhaltungen:
- EP-A- 1 219 158
- EP-A- 1 219 159
- EP-A- 1 332 659
- DE-A1- 10 064 862
- DE-A1- 19 647 522
- DE-A1-102004 052 298

## Beschreibung

Die vorliegende Erfindung bezieht sich allgemein auf das Gebiet der Landwirtschaft und der Verarbeitung von Ernteerzeugnissen. Hierzu werden Fahrzeuge, insbesondere selbstfahrende landwirtschaftliche Erntemaschinen, welche zur Aufnahme der Ernte und zur Verarbeitung des Gutes dienen, eingesetzt. Bei den selbstfahrenden landwirtschaftlichen Erntemaschinen handelt es sich in der Regel um Mähdrescher, Feldhäcksler und alle Arten von Rodern, die mit Einrichtungen zur Verarbeitung und Vorrichtungen zur Förderung des Erntegutes ausgestattet sind. Eine solche Fördervorrichtung ist beispielsweise die Übergabevorrichtung, mit der das gesamte Erntegut auf ein Transportfahrzeug oder einen angehängten Transportbehälter übergeben wird. Die Erntemaschinen nehmen während des Erntevorganges kontinuierlich Erntegut auf, bearbeiten es in bekannter Art und Weise und geben das Erntegut entweder kontinuierlich, beispielsweise bei einem selbstfahrenden Feldhäcksler, oder nach einer Zwischenspeicherung, beispielsweise bei einem Mähdrescher, an ein neben- oder hinterherfahrendes Transportfahrzeug ab. Die Abgabe des Erntegutes erfolgt über die Überladeeinrichtung, die bei einem Mähdrescher u.a. aus einer Übergabevorrichtung besteht. Die Übergabevorrichtung kann bei einem Mähdrescher aus einem Korntankauslaufrohr und bei einem Feldhäcksler aus einem Auswurfkrümmer gebildet werden, an deren Ende sich eine Überladeklappe befindet. Die möglichst verlustarme Übergabe des Erntegutes zwischen einer selbstfahrenden Erntemaschine und einen Transportfahrzeug erfolgt mit Hilfe einer Übergabevorrichtung. Die Übergabevorrichtung ist dazu mit einer Steuerungseinrichtung, zur automatischen oder manuellen Einstellung, ausgestattet und die selbstfahrende landwirtschaftliche Erntemaschine, zur Erfassung der Positionen der beteiligten Fahrzeuge, mit einem Navigationssystem.

Solche Fahrzeuge, insbesondere selbstfahrende landwirtschaftliche Erntemaschinen mit einer Überladeeinrichtung zur Abgabe des Erntegutes an ein Transportfahrzeug oder Transportbehälter, wobei die Einrichtung eine Übergabevorrichtung, eine Steuerung für die Stellung der Übergabevorrichtung, der Überladeklappe und des Erntegutaustrittstrahls, sowie ein Navigationssystem zur Ermittlung der Relativpositionen der beteiligten Fahrzeuge und einer Datenübertragung zwischen den Fahrzeugen, aufweist, sind aus dem Stand der Technik hinreichend bekannt. Bekannt sind hierbei verschiedene Methoden zur automatischen Befüllung von Transportfahrzeugen mit einem Feldhäcksler durch automatische Bewegungen des Auswurfkrümmers. Ein Beispiel ist aus der EP 1 454 520 A1 ersichtlich. Die vorbenannte EP beschreibt eine Steuerung zur Positionierung einer Übergabevorrichtung entsprechend seiner Freiheitsgrade, bei der die Auswurfhöhe, d.h. die Höhe des Auslasses der Austragseinrichtung, beibehalten werden kann, unabhängig vom Erdboden und von der Drehung um die vertikale Achse. Der Nachteil dieser Steuerung besteht darin, dass keine Berücksichtigung, beispielsweise der Relativgeschwindigkeit und Position des Transportfahrzeuges, erfolgt und somit der Auftreffpunkt des Erntegutes auf dem Transportfahrzeug, welches das Erntegut aufnimmt, nicht ermittelt werden kann.

Um den vorgenannten Nachteil zu beseitigen, werden in diesem Zusammenhang verschiedene Methoden zur Erfassung der Position der beteiligten Fahrzeuge und deren Abmessungen im Stand der Technik beschrieben.

Eine solche Vorrichtung zur Erfassung der Position und Bestimmung der Abmessungen von selbstfahrenden landwirtschaftlichen Fahrzeugen wird in der DE 100 64 862 A1 offenbart. Der offenbarte Gegenstand betrifft ein an den Fahrzeugen installiertes Navigationssystem, welches die Relativposition der beteiligten Fahrzeuge, zwischen denen Erntegut überladen werden soll, beispielsweise bestehend aus einem Ernte- und Transportfahrzeug, ermittelt. Die ermittelten Daten werden für eine verbesserte Koordination der Fahrzeuge zueinander verwendet. Die Daten werden auch zur Steuerung der Übergabevorrichtung benutzt. D.h., dass aus der aktuellen Position des Erntefahrzeuges und des Transportfahrzeuges eine Einstellung der Übergabevorrichtung berechnet wird. Des weiteren wird aus den ermittelten Daten der theoretische Auftreffpunkt des Erntegutes auf dem Transportfahrzeug aus den Transportbehälter- und/oder den Transportfahrzeugabmessungen und der aktuellen Einstellung der Übergabevorrichtung berechnet. Liegt der Auftreffpunkt des Erntegutes außerhalb des Transportbehälters, wird eine Warnmeldung erzeugt.

Um den Verlust von Erntegut beim Überladen weiter zu reduzieren bzw. zu minimieren, ist es erforderlich, den Auftreffpunkt des Erntegutes auf dem Transportfahrzeug noch genauer zu definieren und zu steuern.

In der Offenlegungsschrift DE 10 2004 052 298 A1 wurde daher eine Steuerung für die Übergabevorrichtung vorgeschlagen, welche eine permante Kontrolle des Überladevorganges durch den Fahrer reduziert und eine verlustärmere Übergabe des Erntegutes an das Transportfahrzeug gewährleistet. Das Ziel dieser Automatisierung ist, einen kontinuierlichen Erntestrom innerhalb einer vorgegebenen Geometrie zu positionieren, Die definierte Geometrie besteht aus einem virtuellen Raster, welches einen Teilbereich oder den gesamtem Bereich des Erntefahrzeuges umgibt und somit auch das Transportfahrzeug überdeckt. Das Raster besteht aus einer Vielzahl von Feldern, Mit Hilfe der Erntegutaustrittsstrahlsteuerung kann der Fahrer den Erntegutstrahl bei der Abgabe aus der Übergabevorrichtung auf die ansteuerbaren Felder des virtuellen Rasters führen, Insgesamt orientiert sich die Übergabe des Erntegutes an der Lage und Größe des virtuellen Rasters, sowie an der Größe und Lage der Felder, sodass der Schwenkbereich der Übergabevorrichtung durch das virtuelle Raster und die virtuellen Felder bestimmt wird. Nachteilig an dieser Ausführung der Steuerung für die Übergabevorrichtung ist, dass der Fahrer der selbstfahrenden landwirtschaftlichen Erntemaschine weiterhin die Lenkung der Übergabevorrichtung bzw. des Erntegutaustrittstrahles vornehmen muss, um den Auftreffpunkt des Erntegutes auf der Transportfläche so zu verändern, dass die Übergabe des Erntegutes insgesamt verlustfreier erfolgt und nicht am Transportfahrzeug vorbei gefördert wird und als Verlust auf dem Feld liegen bleibt.

Der Erfindung liegt daher die Aufgabe zugrunde, eine Steuerung bzw. ein Steuerungssystem der eingangs genannten Art zu schaffen, welche die genannten Nachteile der bekannten Anordnungen aus dem Stand der Technik vermeidet und eine technische Lösung anzugeben, die es ermöglicht, den Fahrer beim Überladevorgang des Erntegutes derart zu unterstützen bzw. zu entlasten, dass der Verlust von Erntegut durch schlecht koordiniertes Überladen, unübersichtliche Transportfahrzeuge oder bei Überladung in Nachteinsätzen, vermieden werden kann.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und den nachfolgenden Beschreibungen.

Um Fahrzeuge mit diesen Merkmalen der vorliegenden Erfindung herzustellen, insbesondere selbstfahrende landwirtschaftliche Erntemaschinen, ausgestattet mit einem Navigationssystem zur Ermittlung der Relativpositionen der beteiligten Fahrzeuge, einem Datenübertragungssystem zum Austausch von Daten zwischen den Fahrzeugen, einer Überladeeinrichtung zur Abgabe des Erntegutes an ein Transportfahrzeug, wobei die Einrichtung eine Übergabevorrichtung, eine Steuerung zur Positionierung einer Übergabevorrichtung und einer Überladeklappe aufweist, wird erfindungsgemäß vorgeschlagen, die aus dem Stand der Technik bekannten Steuerungen so zu gestalten, dass die Abgabe des Erntegutes auf das Transportfahrzeug bzw. dessen Transportbehälter nur in einen zulässigen Bereich erfolgt, d.h., dass der gewünschte Auftreffpunkt des Erntegutstrahls in einem zulässigen Bereich liegen sollte. Der Zulässigkeitsbereich wird durch eine Randzone begrenzt, wobei der Zulässigkeitsbereich und die Randzone die Fläche des Transportbehälters abbilden. Die Fläche des Transportbehälters wird durch die Transportbehälterkontur bzw. durch die Abmessungen des Transportfahrzeuges und/oder des Transportbehälters gebildet. Die Transportbehälterkontur bildet dabei die äußere Begrenzung der Randzone, Die äußere Begrenzung der Randzone ist abhängig von der Geometrie des Transportfahrzeuges und/oder des Transportbehälters und ist deshalb variabel einstellbar. Die Erfassung der Abmessungen und die Lagebestimmung des Transportfahrzeuges/ Transportbehälters können auf einem sensorischen Weg, beispielsweise über ein Navigationssystem mit GPS- Antennen am Transportbehälter und/oder aus einer Kombination aus Sensoren und mathematischem Modell erfolgen. Die innere Begrenzung der Randzone hingegen liegt innerhalb der Begrenzung der Fläche des Transportbehälters und ist Teil der Ladefläche.

D.h., dass durch die variabel einstellbare innere Begrenzung der Randzone während des Überladevorganges auch die Größe des Zulässigkeitsbereiches für den Auftreffpunkt des Erntegutstrahles einstellbar ist. Die Einstellung der Größe des Zulässigkeitsbereiches richtet sich nach dem Bedarf bzw. den Erntebedingungen. Der Bedarf der Einstellung ist also abhängig von verschiedenen Parametern, wie z.B. den maschinen- und erntegutabhängigen Parametern, wodurch eine Änderung der Einstellung der Randzone, bzw. der inneren und/oder äußeren Begrenzung der Randzone erfolgen kann.

Mit Änderung von erntegutabhängigen Parametern erfolgt somit eine Änderung der Einstellung der inneren Begrenzung der Randzone. Erntegutabhängige Parameter sind beispielsweise der Schüttkegel des geförderten Erntegutes, der durch die unterschiedliche Feuchtigkeit des Erntegutes in der Größe variieren kann. Trockenes Erntegut ergibt einen kleinen Schüttkegel und feuchtes Erntegut hingegen einen großen Schüttkegel, Mit Änderung der Größe des Schüttkegels soll auch die Einstellung der inneren Begrenzung der Randzone und somit die Größe des Zulässigkeitsbereiches für den Auftreffpunkt des Erntegutstrahles variiert werden, Einfluss auf den Schüttkegel hat auch die Sorte und/oder die Häcksellänge des Erntegutes.

Auch Änderungen der maschinenabhängigen Parameter können eine Änderung der inneren Begrenzung der Randzone nach sich ziehen. Maschinenabhängige Parameter sind beispielsweise die Fahrgeschwindigkeit der Erntemaschine und/oder des Transportfahrzeuges, sowie die Relativgeschwindigkeit der Fahrzeuge zueinander, wodurch die innere Begrenzung der Randzone während des Überladevorganges verändert und den neuen Begebenheiten angepasst werden kann. Ein weiterer maschinenabhängiger Parameter berücksichtigt die Schräglage des Ernte- und Transportfahrzeuges, also die Neigung des Feldes oder die Neigung des Transportfahrzeuges und/oder der Erntemaschine zum Feldboden. Auch diese Parameter gehen bei der Festlegung der inneren Begrenzung der Randzone in die Auswertung für die Steuerung ein. In die Auswertung für die Steuerung der Übergabevorrichtung können auch Parameter von Sensoren eingehen, welche die Umgebungsbedingungen erfassen. Parameter von Umgebungsbedingungen sind beispielsweise die Windrichtung und die Windgeschwindigkeit.

Die zwischen der inneren und äußeren Begrenzung der Randzone gebildete Fläche stellt für den Auftreffpunkt des Erntegutstrahls eine Sperrzone dar. In diesen Sperrzonen darf kein Erntegut auftreffen. Die Sperrzone bildet für die Überladung des Erntegutes eine Sicherheitszone zum Rand des Transportbehälters, die nach Bedarf vergrößert oder verkleinert werden kann. Der theoretische Auftreffpunkt des Erntegutstrahls auf dem Transportfahrzeug bzw. Transportbehälter wird gemäß den beschriebenen Verfahren aus dem Stand der Technik der DE 100 64 862 A1 und DE 10 2004 052 298 A1 ermittelt. Die ermittelte Lage des Auftreffpunktes entscheidet, ob ein Überladevorgang gestartet werden kann oder nicht. Liegt der theoretisch ermittelte Auftreffpunkt des Erntegutstrahles im Bereich der Sperrzone, wird der Überladevorgang nicht gestartet. Die Erntegutförderung eines bereits aktiven Überladevorganges wird solange unterbrochen, bis das der theoretische Auftreffpunkt des Erntegutes wieder im Zulässigkeitsbereich der Ladezone liegt, Ist der theoretische Auftreffpunkt des Erntegutstrahls im Zulässigkeitsbereich der Ladezone, wird die Übergabevorrichtung eingeschaltet und der Überladevorgang gestartet. D.h., der Überladevorgang wird nur in dem zulässigen Bereich des Erntegutauftreffpunktes automatisch gestartet und/oder ausgeführt. Falls der Auftreffpunkt des Erntegutstrahles den zulässigen Bereich verlässt wird der Überladevorgang automatisch abgeschaltet und der Fahrer der Erntemaschine und des Transportfahrzeuges werden durch ein Warnsignal informiert. Der Fahrer der Erntemaschine hat jetzt die Möglichkeit, den Überladevorgang durch manuelle Steuerung der Übergabevorrichtung fortzusetzen.

Ein konkretes Ausführungsbeispiel der Erfindung, ist in der Zeichnung, anhand eines Überladevorganges, rein schematisch dargestellt und wird nachfolgend näher beschrieben. Es zeigt:

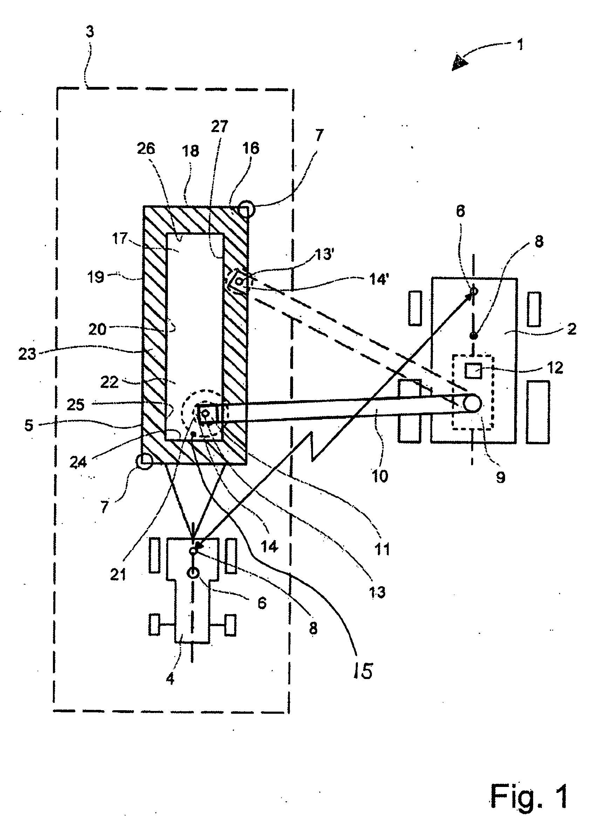

- Fig. 1: eine schematische Darstellung von beteiligten Fahrzeugen während des Ernte- und Überladevorganges, wobei das eine Fahrzeug eine Erntemaschine und das andere ein Erntetransportfahrzeug mit dem erfindungsgemäßen Überladebereich ist.

Die Fig.1 zeigt in schematischer Darstellung zwei parallel nebeneinander fahrende Fahrzeuge 1 in Draufsicht. Ein Fahrzeug besteht aus einer selbstfahrenden Erntemaschine 2 in der Form eines Mähdreschers mit den bekannten Elementen z.B. Emtegutaufnahmevorrichtung, Fahrerkabine, Korntank, Fahrantrieb, Laufräder usw., auf die hier nicht näher eingegangen werden soll und einem Transportfahrzeug 3, bestehend aus einer Zugmaschine 4 und einem anhängbaren Transportbehälter 5. Ein Transportfahrzeug 3 kann auch aus einer Zugmaschine 4 mit integriertem Transportbehälter 5 bestehen, einem so genannten Aufliegerfahrzeug, beispielsweise Lastkraftwagen.
Bei der selbstfahrenden Erntemaschine 2 kann es sich beispielsweise aber auch um einen Feldhäcksler handeln. Der Feldhäcksler nimmt über die Erntegutaufnahmeeinrichtung Erntegut vom Bearbeitungsfeld auf, zerkleinert das Erntegut und gibt es mittels der Überladeeinrichtung 9 an das Transportfahrzeug 3 oder Transportbehälter 5 ab, wobei die Überladeeinrichtung 9 aus einer Steuerung 12, einer Übergabevorrichtung 10 und einer Überladeklappe 11 für die kontinuierliche Abgabe des Erntegutes, besteht.
Der Mähdrescher 2 nimmt ebenfalls über die Erntegutaufnahmeeinrichtung Erntegut vom Bearbeitungsfeld auf, zerkleinert und trennt das Erntegut, wobei die Strohanteile ausgeworfen und die Kornanteile in einem Korntank gespeichert werden. Der Mähdrescher besitzt gleichfalls eine Überladeeinrichtung 9, welche die Entleerung des Korntanks übernimmt, wobei die Überladung des Erntegutes aus dem Korntank auf das Transportfahrzeug 3 bzw. Transportbehälter 5 mittels einer Übergabevorrichtung 10 und einer Übergabeklappe 11 erfolgt. Die Übergabe des Erntegutes bzw, die Entleerung des Korntanks kann kontinuierlich während der
Erntefahrt oder diskontinuierlich erfolgen. Gerade bei der kontinuierlichen Erntegutaufnahme ist es notwendig, den Fahrer bei dieser Tätigkeit nicht zusätzlich mit anderen Tätigkeiten zu belasten, um die volle Konzentration bei der Erntegutaufnahme zu gewährleisten.
Die erfindungsgemäße Entlastung beruht nun darauf, dass eine Erntegutübergabe vollautomatisch erfolgen kann. Zur vollautomatischen Überladung ist es erforderlich, die aktuellen Positionen der beteiligten Fahrzeuge 1, der Erntemaschine 2 und des Transportfahrzeuges 3 mittels eines Navigationssystem 6 zu erfassen. Die selbstfahrende Erntemaschine 2 und das Transportfahrzeug 3, sowie dessen
Transportbehälter 5 sind deshalb mit GPS- Antennen 7 ausgerüstet. Das Navigationssystem 6 ist notwendig, um einerseits die Koordination zwischen den beteiligten Fahrzeugen 2,3 zu ermöglichen und andererseits die Abmessungen des Transportfahrzeuges 3 bzw, des Transportbehälters 5 zu erfassen und diese spezifischen Angaben über das Transportfahrzeug 3 und/oder den Transportbehälter 5 einem Datenspeicher (nicht dargestellt) zu zuführen. Diese speziellen Daten werden zur exakten Steuerung 12 der Übergabevorrichtung 10 benötigt. Aus der Summe der ermittelten Daten, bestehend aus unterschiedlichen Maschinen- und Erntegutparametem, wird der theoretische Auftreffpunkt 13 des Erntegutgutstrahls 14 auf dem Transportbehälter 5 berechnet und zur Steuerung der Übergabevorrichtung 10 und Übergabeklappe 11 herangezogen.
Um die Erntegutverluste bei der Überladung des Erntegutes weiter zu reduzieren, wird erfindungsgemäß, vorgeschlagen, für den Auftreffpunkt 13 des Erntegutstrahles 14 einen Zulässigkeitsbereich 15, der innerhalb der Begrenzung der Ladefläche 17 liegt, zu definieren. Die Ladefläche 17 wird durch die Kontur des Transportbehälters 5 bestimmt. Zur Reduzierung der Erntgutverluste ist es notwendig, den Erntegutstrahl 14 nicht bis an die Kontur des Transportbehälters 5 heranzuführen, sondern einen gewissen Abstand einzuhalten. Der Abstand sollte aber aufgrund der unterschiedlichen maschinen- und erntegutabhängigen Parameter variabel einstellbar sein. Um für den Auftreffpunkt 13 des Erntegutstrahles 14 einen definierten Abstand zur Transportbehälterkontur 18 zu erhalten, wird um die Transportbehälterkontur 18 eine Randzone 16 gebildet, die für den Auftreffpunkt 13 des Erntegutstrahtes 14 eine Sperrzone 23 darstellt. Die Randzone 16 wird einerseits durch die äußere Begrenzung 19 und andererseits durch die innere Begrenzung 20 gebildet. Die äußere Begrenzung 19 der Randzone 16 wird durch die Transportbehälterkontur 18 festgelegt, wobei die innere Begrenzung 20 der Randzone 16 den Zulässigkeitsbereich 15 für die theoretische Ladezone 22 definiert. Die Ladezone 22 und die Randzone 16 bilden gemeinsam die Ladefläche 17.
Wie bereits zuvor angegeben, kann die innere Begrenzung 19 der Randzone 16 während des Erntebetriebes bzw. während der Überladung verändert und somit den Erntebedingungen angepasst werden, wobei die innere Begrenzung 20 der Randzone 16, im vorliegenden Beispiel der Figur 1, aus vier inneren Begrenzungslinien 24, 25, 26, 27 gebildet wird. Jeweils zwei Begrenzungslinien 24. 26 und 25, 27 sind in etwa parallel beabstandet und durch die Transportbehälterkontur 18 vorgegeben. Andere geometrische Transportbehälterkonturen 18 ergeben andere geometrische innere Begrenzungslinien, Eine Änderung der inneren Begrenzung 20 der Randzone 16 kann alle vier Begrenzungslinien 24, 25, 26, 27 betreffen. Die Änderung jeder einzelnen Begrenzungslinie, aufgrund der maschinen- und ernteabhängigen Parameter, ist ebenfalls möglich, Beispielsweise werden alle vier Begrenzungslinien 24, 26, 26, 27 mit der Änderung des Durchmessers des Schüttkegels 21 verändert, oder zwei Begrenzungslinien 25, 27 mit der Neigung des Transportbehälters 5, der sich in Schräglage mit dem Feldboden befindet Eine weitere beispielhafte Änderung der inneren Begrenzungslinie 24,26 kann sich aus der Berücksichtigung der Windverhältnisse ergeben. Auch ist eine Änderung nur einer der vier Begrenzungslinien möglich. Die Änderungen der inneren Begrenzungslinien 24, 25, 26, 27 haben immer eine Änderung des Zulässigkeitsbereiches 15 für den Auftreffpunkt 13 des Erntegutstrahles 14 zur Folge und somit für die theoretische Ladezone 22.
Diese theoretische Ladezone 22 wird von der Übergabevorrichtung 10 angesteuert, wobei die Übergabevorrichtung 10 bei einem Mähdrescher aus einem Korntankleerrohr und bei einem Feldhäcksler aus einem Auswurfkrümmer bestehen kann. Die Überladung des Erntegutes von der Erntemaschine 2 auf ein Transportfahrzeug 3 kann kontinuierlich oder diskontinuierlich erfolgen. Zwischen der Erntemaschine 2 und dem Transportfahrzeug 3 besteht eine weitere Verbindung, bestehend aus einem übertragungssystem 8. Das Übertragungssystem 8 stellt eine Datenübertragungsstrecke zur Verfügung. Mittels dieser Datenübertragungsstrecke können Daten für die Koordination der Fahrzeuge und die Steuerung der Übergabevorrichtung 10 ausgetauscht werden.

### Bezugszeichenliste:

- 1: Fahrzeuge
- 2: Erntemaschine
- 3: Transportfahrzeug
- 4: Zugmaschine
- 5: Transportbehälter
- 6: Navigationssystem
- 7: GPS- Antenne
- 8: Datenübertragungssystem
- 9: Überladeeinrichtung
- 10: Übergabevorrichtung
- 11: Überladeklappe
- 12: Steuerung
- 13: Auftreffpunkt
- 14: Erntegutstrahl
- 15: Zulässigkeitsbereich
- 16: Randzone
- 17: Fläche
- 18: Transportbehälterkontur
- 19: Äußere Begrenzung
- 20: Innere Begrenzung
- 21: Schüttkegel
- 22: Ladezone
- 23: Sperrzone
- 24: Begrenzungslinie
- 25: Begrenzungslinie
- 26: Begrenzungslinie
- 27: Begrenzungslinie

## Patentansprüche

1. Fahrzeuge (1), insbesondere selbstfahrende landwirtschaftliche Erntemaschinen (2), ausgestattet mit einem Navigationssystem (6) zur Ermittlung der Relativpositionen der beteiligten Fahrzeuge (2,3), einem Datenübertragungssystem (8) zum Austausch von Daten zwischen den Fahrzeugen (2,3), einer Überladeeinrichtung (9) zur Abgabe des Erntegutes an ein Transportfahrzeug (3), wobei die Einrichtung (9) eine Übergabevorrichtung (10), eine Steuerung (12) zur Positionierung der Übergabevorrichtung (10) und einer Überladeklappe (11) aufweist,
**dadurch gekennzeichnet, dass**
der Auftreffpunkt (13) des Erntegutstrahls (14) in einem durch eine Randzone (16) begrenzten Zulässigkeitsbereich liegt, der Zulässigkeitsbereich (15) und die Randzone (16) die Fläche (17) des Transportbehälters (5) abbilden und mit Änderung von erntegutabhängigen Parametern eine Änderung einer Einstellung der inneren Begrenzung (20) der Randzone (16) erfolgt.

2. Fahrzeuge (1), nach Anspruch 1,
**dadurch gekennzeichnet, dass**
die Fläche (17) des Transportbehälters (5) durch die Transportbehälterkontur (18) gebildet wird.

3. Fahrzeuge (1), nach Anspruch 1 bis 2,
**dadurch gekennzeichnet, dass**
die Transportbehälterkontur (18) die äußere Begrenzung (19) der Randzone (16) bildet.

4. Fahrzeuge (1), nach Anspruch 1 bis 2,
**dadurch gekennzeichnet, dass**
die äußere Begrenzung (19) variabel einstellbar ist.

5. Fahrzeuge (1), nach Anspruch 1 bis 3,
**dadurch gekennzeichnet, dass**
die innere Begrenzung (20) der Randzone (16) innerhalb der Begrenzung (18) der Ladefläche (17) liegt.

6. Fahrzeuge (1), nach einem oder mehreren der vorangegangenen Ansprüche,
**dadurch gekennzeichnet, dass**
durch die variabel einstellbare innere Begrenzung (20) der Randzone (16) auch die Größe des Zulässigkeitsbereiches (15) für den Auftreffpunkt (13) des Erntegutstrahles (14) eingestellt wird.

7. Fahrzeuge (1), nach einem oder mehreren der vorangegangenen Ansprüche,
**dadurch gekennzeichnet, dass**
mit Änderung der maschinen- und erntegutabhängigen Parameter eine Änderung der Einstellung der Randzone (16) erfolgt.

8. Fahrzeuge (1) nach einem oder mehreren der vorangegangen Ansprüche **dadurch gekennzeichnet, dass** mit Änderung des Schüttkegels eine Änderung der inneren Begrenzung (20) der Randzone (16) erfolgt.

9. Fahrzeuge (1), nach einem oder mehreren der vorangegangenen Ansprüche,
**dadurch gekennzeichnet, dass**
mit Änderung der maschinenabhängigen Parameter eine Änderung der inneren Begrenzung (20) der Randzone (16) erfolgt.

10. Fahrzeuge (1), nach einem oder mehreren der vorangegangenen Ansprüche,
**dadurch gekennzeichnet, dass**
mit Änderung der Relativgeschwindigkeit eine Änderung der inneren Begrenzung (20) der Randzonen (16) erfolgt.

11. Fahrzeuge (1), nach einem oder mehreren der vorangegangenen Ansprüche,
**dadurch gekennzeichnet, dass**
die zwischen der inneren und äußeren Begrenzung (19,20) der Randzone (16) gebildete Fläche für den Auftreffpunkt (13) des Erntegutstrahles (14) eine Sperrzone (23) darstellt.

12. Fahrzeuge (1), nach einem oder mehreren der vorangegangenen Ansprüche,
**dadurch gekennzeichnet, dass**
die theoretisch ermittelte Lage des Auftreffpunktes (13) über den Start des Überladevorganges entscheidet.

13. Fahrzeuge (1), nach einem oder mehreren der vorangegangenen Ansprüche,
**dadurch gekennzeichnet, dass**
der Überladevorgang nicht gestartet wird, wenn der Auftreffpunkt (13) des Erntegutstrahles (14) in der Sperrzone (23) liegt.

14. Fahrzeuge (1), nach einem oder mehreren der vorangegangenen Ansprüche,
**dadurch gekennzeichnet, dass**
der Überladevorgang gestartet wird, wenn der Auftreffpunkt (13) des Erntegutstrahles (14) im Zulässigkeitsbereich (15) liegt.

15. Fahrzeuge (1), nach einem oder mehreren der vorangegangenen Ansprüche,
**dadurch gekennzeichnet, dass**
der Überladevorgang abgeschaltet wird, wenn der Auftreffpunkt (13) des Erntegutstrahles (14) den Zulässigkeitsbereich (15) verlässt.

16. Fahrzeuge (1), nach einem oder mehreren der vorangegangenen Ansprüche,
**dadurch gekennzeichnet, dass**
die innere Begrenzung (20) der Randzone (16) aus vier Begrenzungslinien (24,25,26,27) gebildet wird.

17. Fahrzeuge (1), nach einem oder mehreren der vorangegangenen Ansprüche,
**dadurch gekennzeichnet, dass**
die Übergabevorrichtung (10) bei einem Mähdrescher aus einem Korntankentleerrohr gebildet wird.

18. Fahrzeuge (1), nach einem oder mehreren der vorangegangenen Ansprüche,
**dadurch gekennzeichnet, dass**
die Übergabevorrichtung (10) bei einem Feldhäcksler aus einem Auswurfkrümmer gebildet wird.

19. Fahrzeuge (1), nach einem oder mehreren der vorangegangenen Ansprüche,
**dadurch gekennzeichnet, dass**
die Überladung des Erntegutes von der Erntemaschine (2) auf ein Transportfahrzeug (3) kontinuierlich oder diskontinuierlich erfolgt.

## Claims

1. Vehicles (1), in particular self-propelled agricultural harvesting machines (2) equipped with a navigation system (6) for ascertaining the relative positions of the vehicles (2, 3) involved, a data transmission system (8) for the exchange of data between the vehicles (2, 3), a transfer device (9) for discharge of the crop material to a transport vehicle (3), wherein the device (9) has a transfer apparatus (10), a control (12) for positioning the transfer apparatus (10) and a transfer flap (11),
**characterised in that**
the impingement point (13) of the jet of crop material (14) is in an admissibility region delimited by an edge zone (16), the admissibility region (15) and the edge zone (16) define the surface of the transport container (5) and a change in a setting of the inner boundary (20) of the edge zone (16) is effected with a change in crop material-dependent parameters.

2. Vehicles (1) according to claim 1 **characterised in that** the surface (17) of the transport container (5) is formed by the transport container contour (18).

3. Vehicles (1) according to claims 1 to 2 **characterised in that** the transport container contour (18) forms the outer boundary (19) of the edge zone (16).

4. Vehicles (1) according to claims 1 to 2 **characterised in that** the outer boundary (19) is variably adjustable.

5. Vehicles (1) according to claims 1 to 3 **characterised in that** the inner boundary (20) of the edge zone (16) lies within the boundary (18) of the load surface (17).

6. Vehicles (1) according to one or more of the preceding claims **characterised in that** the size of the admissibility region (15) for the impingement point (13) of the jet of crop material (14) is also adjusted by the variably adjustable inner boundary (20) of the edge zone (16).

7. Vehicles (1) according to one or more of the preceding claims **characterised in that** a change in the setting of the edge zone (16) is effected with a change in the machine-dependent and crop material-dependent parameters.

8. Vehicles (1) according to one or more of the preceding claims **characterised in that** a change in the inner boundary (20) of the edge zone (16) is effected with a change in the talus cone.

9. Vehicles (1) according to one or more of the preceding claims **characterised in that** a change in the inner boundary (20) of the edge zone (16) is effected with a change in the machine-dependent parameters.

10. Vehicles (1) according to one or more of the preceding claims **characterised in that** a change in the inner boundary (20) of the edge zones (16) is effected with a change in the relative speed.

11. Vehicles (1) according to one or more of the preceding claims **characterised in that** the surface formed between the inner and outer boundaries (19, 20) of the edge zone (16) forms a barrier zone (23) for the impingement point (13) of the jet of crop material (14).

12. Vehicles (1) according to one or more of the preceding claims **characterised in that** the theoretically ascertained position of the impingement point (13) decides about the start of the transfer operation.

13. Vehicles (1) according to one or more of the preceding claims **characterised in that** the transfer operation is not started when the impingement point (13) of the jet of crop material (14) is in the barrier zone (23).

14. Vehicles (1) according to one or more of the preceding claims **characterised in that** the transfer operation is started when the impingement point (13) of the jet of crop material (14) is in the admissibility region (15).

15. Vehicles (1) according to one or more of the preceding claims **characterised in that** the transfer operation is shut down when the impingement point (13) of the jet of crop material (14) leaves the admissibility region (15).

16. Vehicles (1) according to one or more of the preceding claims **characterised in that** the inner boundary (20) of the edge zone (16) is formed from four boundary lines (24, 25, 26, 27).

17. Vehicles (1) according to one or more of the preceding claims **characterised in that** the transfer apparatus (10) in a combine harvester is formed from a grain tank emptying pipe.

18. Vehicles (1) according to one or more of the preceding claims **characterised in that** the transfer apparatus (10) in the case of a forage harvester is formed from a discharge pipe bend.

19. Vehicles (1) according to one or more of the preceding claims **characterised in that** transfer of the crop material from the harvesting machine (2) on to a transport vehicle (3) is effected continuously or discontinuously.

## Revendications

1. Véhicules (1), en particulier machines agricoles de récolte automotrices (2), équipés d'un système de navigation (6) pour déterminer les positions relatives des véhicules impliqués (2, 3), d'un système de transmission de données (8) pour l'échange de données entre les véhicules (2, 3), d'un moyen de transbordement (9) pour délivrer le produit de récolte à un véhicule de transport (3), le moyen (9) comportant un dispositif de transfert (10), une commande (12) pour le positionnement du dispositif de transfert (10) et d'un volet de transfert (11), **caractérisés en ce que** le point d'impact (13) du jet de produit de récolte (14) se situe dans un domaine d'admissibilité délimité par une zone marginale (16), **en ce que** le domaine d'admissibilité (15) et la zone marginale (16) représentent la surface (17) du contenant de transport (5), et **en ce qu'**une modification de paramètres dépendants du produit de récolte entraîne une modification d'un réglage de la délimitation intérieure (20) de la zone marginale (16).

2. Véhicules (1) selon la revendication 1, **caractérisés en ce que** la surface (17) du contenant de transport (5) est formée par le contour de contenant de transport (18).

3. Véhicules (1) selon les revendications 1 à 2, **caractérisés en ce que** le contour de contenant de transport (18) forme la délimitation extérieure (19) de la zone marginale (16).

4. Véhicules (1) selon les revendications 1 à 2, **caractérisés en ce que** la délimitation extérieure (19) est réglable de manière variable.

5. Véhicules (1) selon les revendications 1 à 3, **caractérisés en ce que** la délimitation intérieure (20) de la zone marginale (16) se situe à l'intérieur de la délimitation (18) de la surface de chargement (17).

6. Véhicules (1) selon une ou plusieurs des revendications précédentes, **caractérisés en ce que** le réglage variable de la délimitation intérieure (20) de la zone marginale (16) règle aussi la grandeur du domaine d'admissibilité (15) du point d'impact (13) du jet de produit de récolte (14).

7. Véhicules (1) selon une ou plusieurs des revendications précédentes, **caractérisés en ce qu'**une modification des paramètres dépendants de la machine et du produit de récolte entraîne une modification du réglage de la zone marginale (16).

8. Véhicules (1) selon une ou plusieurs des revendications précédentes, **caractérisés en ce qu'**une modification du cône de déversement entraîne une modification de la délimitation intérieure (20) de la zone marginale (16).

9. Véhicules (1) selon une ou plusieurs des revendications précédentes, **caractérisés en ce qu'**une modification des paramètres dépendants de la machine entraîne une modification de la délimitation intérieure (20) de la zone marginale (16).

10. Véhicules (1) selon une ou plusieurs des revendications précédentes, **caractérisés en ce qu'**une modification de la vitesse relative entraîne une modification de la délimitation intérieure (20) des zones marginales (16).

11. Véhicules (1) selon une ou plusieurs des revendications précédentes, **caractérisés en ce que** la surface formée entre la délimitation intérieure et extérieure (19, 20) de la zone marginale (16) représente une zone d'exclusion (23) pour le point d'impact (13) du jet de produit de récolte (14).

12. Véhicules (1) selon une ou plusieurs des revendications précédentes, **caractérisés en ce que** la position déterminée théoriquement du point d'impact (13) décide du lancement de l'opération de transbordement.

13. Véhicules (1) selon une ou plusieurs des revendications précédentes, **caractérisés en ce que** l'opération de transbordement n'est pas lancée lorsque le point d'impact (13) du jet de produit de récolte (14) se trouve dans la zone d'exclusion (23).

14. Véhicules (1) selon une ou plusieurs des revendications précédentes, **caractérisés en ce que** l'opération de transbordement est lancée lorsque le point d'impact (13) du jet de produit de récolte (14) se trouve dans le domaine d'admissibilité (15).

15. Véhicules (1) selon une ou plusieurs des revendications précédentes, **caractérisés en ce que** l'opération de transbordement est arrêtée lorsque le point d'impact (13) du jet de produit de récolte (14) quitte le domaine d'admissibilité (15).

16. Véhicules (1) selon une ou plusieurs des revendications précédentes, **caractérisés en ce que** la délimitation intérieure (20) de la zone marginale (16) est formée de quatre lignes de délimitation (24, 25, 26, 27).

17. Véhicules (1) selon une ou plusieurs des revendications précédentes, **caractérisés en ce que**, sur une moissonneuse-batteuse, le dispositif de transfert (10) est formé d'un tube de vidange de trémie à grains.

18. Véhicules (1) selon une ou plusieurs des revendications précédentes, **caractérisés en ce que**, sur une ensileuse, le dispositif de transfert (10) est formé d'une goulotte d'éjection.

19. Véhicules (1) selon une ou plusieurs des revendications précédentes, **caractérisés en ce que** le transbordement du produit de récolte de la machine de récolte (2) vers un véhicule de transport (3) s'effectue de manière continue ou discontinue.
